# EUROPEAN PATENT SPECIFICATION

(11) **EP 1 698 547 B1**
(45) Date of publication and mention of the grant of the patent: **16.04.2008**
(21) Application number: 06003500.3
(22) Date of filing: 21.02.2006
(51) Int. Cl.: B62K 11/06, B62K 19/12, B62K 25/28

(54) **Body frame of motorcycle**
Motorradrahmen
Cadre d'une motocyclette

(30) Priority: 02.03.2005 JP 2005057030
(43) Date of publication of application: 06.09.2006
(73) Proprietor: HONDA MOTOR CO., LTD., Tokyo (JP)
(72) Inventor: Taniguchi, Masayuki, Wako-shi, Saitama, 351-0193 (JP); Ishikawa, Yuzuru, Wako-shi, Saitama, 351-0193 (JP); Hasegawa, Kenji, Wako-shi, Saitama, 351-0193 (JP); Shimokawa, Koji, Wako-shi, Saitama, 351-0193 (JP); Nakajima, Shunichi, Wako-shi, Saitama, 351-0193 (JP); Iizuka, Naoshi, Wako-shi, Saitama, 351-0193 (JP)
(74) Representative: Rupp, Christian

(56) References cited:
- WO-A-01/89916
- US-A- 5 011 459
- US-A- 5 022 456
- US-A1- 2002 020 985
- PATENT ABSTRACTS OF JAPAN vol. 018, no. 521 (M-1681), 30 September 1994 (1994-09-30) & JP 06 179387 A (SUZUKI MOTOR CORP), 28 June 1994 (1994-06-28)
- YAMAGUCHI J: "LIGHTWEIGHT MOTORCYCLE ADOPTS DIECAST ALUMINUM FRAME" AUTOMOTIVE ENGINEERING, SOCIETY OF AUTOMOTIVE ENGINEERS. WARRENDALE, US, vol. 97, no. 2, 1 February 1989 (1989-02-01), page 173, XP000113839 ISSN: 0098-2571

## Description

The present invention relates to the improvement of a body frame of a motorcycle.

A body frame of a conventional type motorcycle where a pivot part for supporting a swing arm is provided to the body frame is known (for example, Patent document : JP No. 3436330, or closest prior art document US 2002/0020985).

Referring to Figs. 2 to 4 in the patent document 1, the patent document 1 will be described below.
A body frame 1 is provided with a main pipe 3 extended backward and downward from a head pipe 2, a seat rail 4 extended backward from the rear upside of the main pipe 3 and a subpipe 7 laid between a lower part of the main pipe 3 and the seat rail 4, a pair of left and right reinforcements 13, 13 are attached to the rear extended downward of the main pipe 3, a cylindrical pivot part 8a is attached so that the main pipe 3 and the reinforcements 13, 13 are pierced, and a rear cushion receiver 11 is attached to a connection of the main pipe 3 and the seat rail 4.

As the above-mentioned reinforcements 13, 13 are welded to the main pipe 3, the pivot part 8a is welded to the main pipe 3 and the reinforcements 13, 13 and the rear cushion receiver 11 is also welded to the main pipe 3 and the seat rail 4, welded locations are increased and time for welding increases. Besides, as many parts are required, the weight and the cost increase. Therefore, the enhancement of productivity, lightening and the reduction of the cost are desired.
The object of the invention is to enhance the productivity of a body frame, to lighten the body frame and to reduce the cost by improving the body frame of a motorcycle.

The invention disclosed in Claim 1 is based upon a motorcycle where a head pipe provided to a front end, one main frame extended backward from the head pipe and a rear frame extended substantially downward from the rear of the main frame are provided to a main part of a body frame, a pivot pierces a pivot supporting part provided to the rear frame, a swing arm for supporting a rear wheel is attached to the pivot so that the swing arm can be vertically swung and a cushion unit is laid between the swing arm and the side of the body frame, and is characterized in that the main part of the body frame is cast in an aluminium alloy and the rear frame on the upside and on the downside of the pivot supporting part is protruded on both sides of the vehicle at the pivot supporting part to attach left and right brackets for supporting both ends of the pivot.

The rear frame on the upside and on the downside of the pivot supporting part is protruded on both sides of the vehicle from the pivot supporting part to attach the left and right brackets for supporting both ends of the pivot to the rear frame, left and right arms of the swing arm are arranged on both sides of the pivot supporting part, and the swing arm is supported by the pivot attached to the pivot supporting part and the left and right brackets.
The above-mentioned pivot supporting part and projections protruded on the upside and on the downside of the pivot supporting part are integrated by casting.

The invention disclosed in Claim 2 is characterized in that standing walls extended backward for covering the left and the right of the cushion unit are provided to at least one of the rear of the main frame and the rear of the rear frame.
The main frame or/and the rear frame and the standing walls provided to at least one of the rear of the main frame and the rear of the rear frame are integrated by casting.

The invention disclosed in Claim 3 is characterized in that recessed portions open in the right and left directions , the pivot supporting part, an upper bracket mounting part and a lower bracket mounting part respectively protruded sideways are integrated by casting the rear frame in a mold which can be split sideways.

As the recessed portion open sideways, the pivot supporting part, the upper bracket mounting part and the lower bracket mounting part respectively protruded in the right and left directions are integrated in the mold which can be split into right and left, the recessed portion, the pivot supporting part, the upper bracket mounting part and the lower bracket mounting part can be easily formed.

According to the invention disclosed in Claim 1, the main part of the body frame where the upside and the downside of the pivot supporting part in the rear frame are protruded on both sides of the vehicle from the pivot supporting part, the left and right arms of the swing arm are arranged between the pivot supporting part and each bracket and the swing arm is supported by both the pivot supporting part and the left and right brackets via the pivot can be easily integrated by casting, no welded part around a pivot as in a conventional type is required, the number of parts can be reduced, the productivity of the body frame can be enhanced, the body frame is lightened, and the cost can be reduced.

According to the invention disclosed in Claim 2, as the standing walls are provided to at least one of the rear of the main frame and the rear of the rear frame, the standing walls can be easily formed by casting without welding separate parts, and the strength and the rigidity of the body frame can be easily secured by the standing walls.

According to the invention disclosed in Claim 3, as the recessed portion open sideways, the pivot supporting part, the upper bracket mounting part and the lower bracket mounting part respectively protruded sideways are integrated in the mold which can be split sideways, the recessed portion, the pivot supporting part, the upper bracket mounting part and the lower bracket mounting part can be easily formed.
Fig. 1 is a side view showing a motorcycle adopting a body frame according to the invention;
Fig. 2 is a side view showing a main frame according to the invention;
Fig. 3 is a perspective view showing the main frame according to the invention;
Figs. 4A to 4C are sectional views showing the main frame according to the invention;
Fig. 5 is a back view showing the main frame according to the invention; and
Fig. 6 is a sectional view (a part of which is a side view) showing a state in which a rear cushion unit is attached to a rear frame according to the invention.

Referring to the attached drawings, a best embodiment for embodying the invention will be described below. The drawings shall be viewed in a direction of reference numerals.

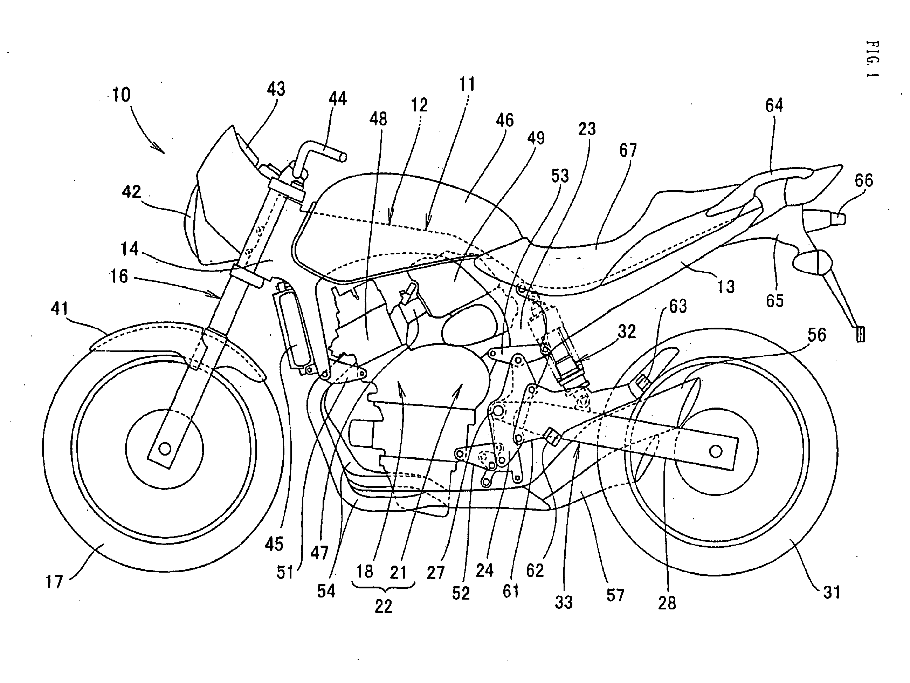

Fig. 1 is a side view showing a motorcycle adopting a body frame according to the invention, and the motorcycle 10 is a vehicle where the body frame 11 is configured by a main frame 12 on the front side and a pair of left and right seat rails 13, 13 (only 13 on this side is shown) extended backward and diagonally upward from a rear upside of the main frame 12, a front fork 16 is attached to a head pipe 14 provided to the front end of the main frame 12 so that the front fork can be steered, a front wheel 17 is attached to the lower end of the front fork 16, a power unit 22 including an engine 18 and a transmission 21 is supported by a lower part of the front and a lower part of the rear of the main frame 12, a pivot 27 is attached to a rear frame 23 provided to the rear of the main frame 12 and a pair of left and right brackets 24, 26 (only 24 on this side is shown) attached to both sides of the rear frame 23, a swing arm 28 is attached to the pivot 27 so that the swing arm can be vertically swung, a rear wheel 31 is attached to the rear end of the swing arm 28 and a rear cushion unit 32 is laid between the upside of the swing arm 28 and the rear upside of the main frame 12.
The swing arm 28 and the rear cushion unit 32 form suspension 33 for a rear wheel for suspending the rear wheel 31.

A reference numeral 41 denotes a front fender covering the upside of the front wheel 17, 42 denotes a headlamp, 43 denotes a meter, 44 denotes a handlebar, 45 denotes a radiator, 46 denotes a fuel tank attached to the upside of the main frame 12, 47 denotes a throttle body attached to the rear of a cylinder head 48 of the engine 18, 49 denotes an air cleaner connected to the throttle body 47, 51, 52 denote a bracket for supporting the power unit 22, 53 denotes a rear supporting part provided to the rear frame 23 to support the power unit 22, 54 denotes an exhaust pipe extended backward from the front of the cylinder head 48 through the downside of the engine 18, and 56, 57 denote a first muffler and a second muffler connected to plural exhaust pipes 54 via aggregate.

Reference numerals 61 and 61 (only 61 on this side is shown) denote a pair of left and right step supporting stays attached to brackets 24, 26, 62 and 62 (only 62 on this side is shown) denote a pair of left and right steps for a rider attached to the step supporting stays 61, 61, 63 and 63 (only 63 on this side is shown) denote a pair of left and right steps for a passenger attached to the step supporting stays 61, 61, 64 denotes a grab rail, 65 denotes a rear fender covering the upside of the rear wheel 31, 66 denotes a tail lamp, and 67 denotes a seat attached onto the seat rails 13, 13.

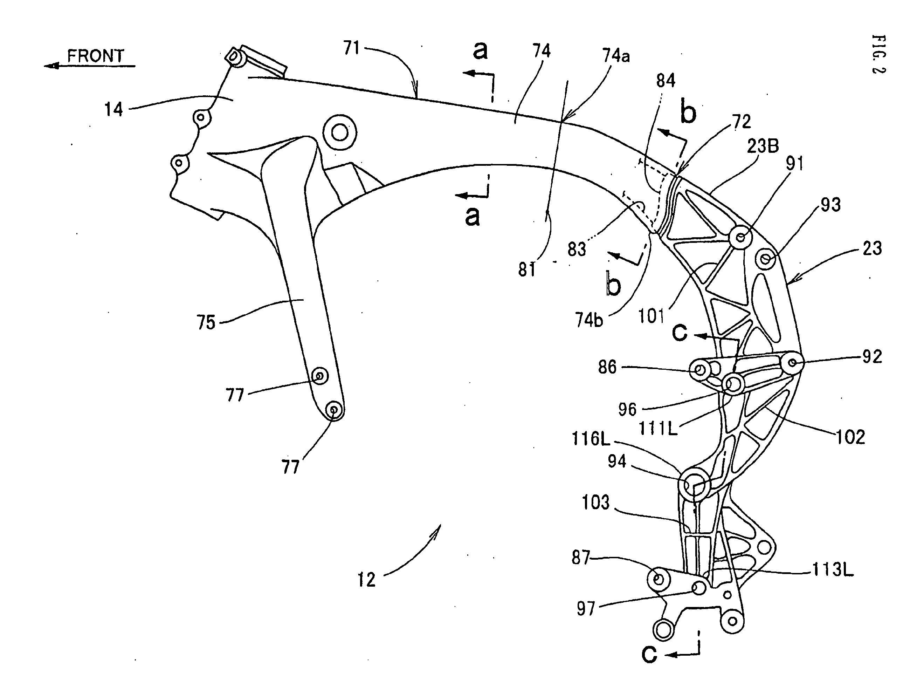

Fig. 2 is a side view showing the main frame according to the invention (an arrow FRONT in Fig. 2 shows a forward direction of the vehicle) and the main frame 12 is a member cast in an aluminum alloy and configured by two front and rear parts which are a front frame 71 on the front side and the rear frame 23 connected to the rear end of the front frame 71 by welding. A reference numeral 72 denotes a connection of the front frame 71 and the rear frame 23.

The front frame 71 is a member formed to be hollow by inserting a core in casting and formed by integrating the head pipe 14, one main frame part 74 extended backward from the head pipe 14 and a pair of left and right front supporting parts 75, 76 (only 75 on this side is shown) extended diagonally downward on the side and diagonally downward on the rear side from a lower part of the front of the main frame part 74 so as to support the front of the engine 18 (see Fig. 1). Reference numerals 77, 77 denote an engine supporting hole respectively provided to the ends of the front supporting parts 75, 76 so as to support of the front of the engine 18 (see Fig. 1).

The main frame part 74 is provided with a small cross-section part 74a the cross-sectional area of which is the smallest (a straight line passing the small cross-section part 74a shall be 81) in the rear and the cross-sectional area (that is, the cross-sectional area of the connection 72) of a front side connecting part 74b provided to the rear end is made larger than the cross-sectional area of the small cross-section part 74a.

Force which tries to deform the main frame 12 is applied to the main frame 12 built in the vehicle from the head pipe 14 via the front wheel and the front fork or from the rear frame 23 via the rear wheel, the swing arm and the pivot while the vehicle is run.

For example, in braking, backward force acts on the head pipe 14 from the side of the front wheel and the whole main frame 12 is deformed so that distance between axles of the front and the rear wheel, that is, a wheel base is shorter.
When a throttle is opened for acceleration, forward force acts on the rear frame 23 by the driving force of the rear wheel and the whole main frame 12 is deformed so that the wheel base is shorter.

In the above-mentioned case, large stress is caused in the small cross-section part 74a, however, as the cross-sectional area of the connection 72 is larger than that of the small cross-section part 74a, stress caused in the connection 72 is smaller than that in the small cross-section part 74a.

The reason why the connection 72 is provided at the back of the small cross-section part 74a in the rear of the vehicle is that in case the connection 72 is provided in front of the small cross-section part 74a in the front of the vehicle, excess stress is caused in the connection 72 because maximum input from the side of the head pipe 14 (for example, input in full braking) is larger than maximum input from the side of the rear frame 23.
The reason is also that the connection 72 is a position in which the main frame is easily divided into one main frame part 74 and the rear frame 23 for supporting each part of the body.

The rear frame 23 is provided with a rear side connecting part 84 protruded to fit it into a hollow part 83 of the front side connecting part 74b of the front frame 71, a pair of left and right power unit mounting holes 86, 86 (only 86 on this side is shown) and a pair of left and right power unit mounting holes 87, 87 (only 87 on this side is shown) respectively for mounting the rear of the power unit 22 (see Fig. 1), seat rail mounting holes 91, 91 (only 91 on this side is shown) and seat rail mounting holes 92, 92 (only 92 on this side is shown) respectively for mounting the seat rails 13, 13 (see Fig. 1), a pair of left and right cushion upper part mounting holes 93, 93 (only 93 on this side is shown) for mounting one end of the rear cushion unit 32 (see Fig. 1), a pivot insertion hole 94 for inserting the pivot 27 (see Fig. 1), a pair of left and right bracket mounting holes 96, 96 (only 96 on this side is shown) and bracket mounting holes 97, 97 (only 97 on this side is shown) respectively for mounting the bracket 24, 26 (see Fig. 1), and on the side, plural ribs, for example, a pair of left and right ribs 101 to 103 (only 101 to 103 on this side are shown) are provided.

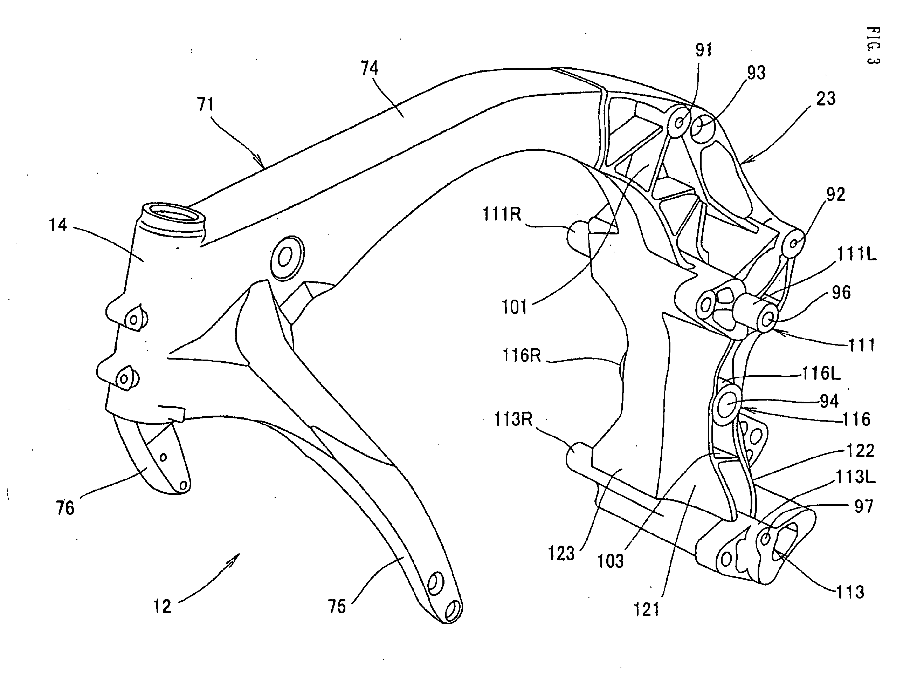

Fig. 3 is a perspective view showing the main frame according to the invention and shows the main frame 12 formed by connecting the rear frame integrated in casting to the main frame part 74 of the front frame 71 integrated in casting.

One main frame part 74 is substantially linearly extended backward and the front supporting parts 75, 76 which function as an engine hanger are extended substantially downward on the left and on the right from the main frame part 74. The main frame part 74 and the front supporting parts 75, 76 are hollow.
An upper bracket mounting part 111 (configured by a pair of left upper mounting part 111L and right upper mounting part 111R) in which the bracket mounting hole 96 is made and a lower bracket mounting part 113 (configured by a pair of left lower mounting part 113L and right lower mounting part 113R) in which the bracket mounting hole 97 is made respectively of the rear frame 23 are protruded sideways from a pivot supporting part 116 (configured by a pair of left pivot supporting part 116L and right pivot supporting part 116R) in which the pivot insertion hole 94 is made.

Reference numerals 121, 122 denote a left reinforcement wall for coupling the left upper mounting part 111L, the left pivot supporting part 116L and the left lower mounting part 113L, and 123 and 124 (only 123 is shown) denote a right reinforcement wall for coupling the right upper mounting part 111R, the right pivot supporting part 116R and the right lower mounting part 113R.

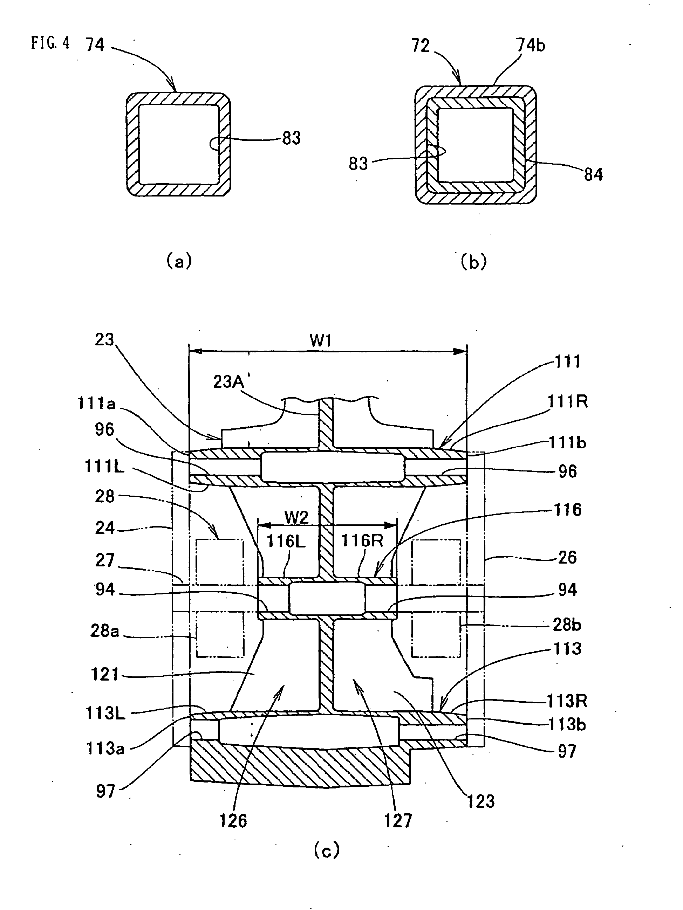

Figs. 4A to 4C are sectional views showing the main frame according to the invention.
Fig. 4A is a sectional view viewed from directions shown by arrows a, a shown in Fig. 2 and shows that the cross section of the main frame part 74 is in the shape of a square pipe.
Fig. 4B is a sectional view viewed from directions shown by arrows b, b shown in Fig. 2 and in the connection 72 of the front frame and the rear frame, the rear side connecting part 84 in the shape of a square pipe is fitted inside the front side connecting part 74b in the shape of the square pipe.

Fig. 4C is a sectional view viewed from directions shown by arrows c, c shown in Fig. 2, and shows that: a vertical wall 23A extending vertically substantially over the whole length of the center of the rear frame is provided to the rear frame 23; the left upper mounting part 111L, the right upper mounting part 111R, the left pivot supporting part 116L, the right pivot supporting part 116R, the left lower mounting part 113L and the right lower mounting part 113R are extended leftward or rightward from the vertical wall 23A; the width W1 of the upper bracket mounting part 111 and the lower bracket mounting part 113 is made longer than the width W2 of the pivot supporting part 116L; a left arm 28a and a right arm 28b of the swing arm 28 are arranged between each bracket 24, 26 mounted on end faces (an upper-side left end face 111a, an upper-side right end face 111b, a lower-side left end face 113a and a lower-side right end face 113b) of the upper bracket mounting part 111 and the lower bracket mounting part 113; and the pivot supporting part 116 and the swing arm 28 is supported by the pivot supporting part 116 and the brackets 24, 26 via the pivot 27 by piercing the pivot 27 in the bracket 24, the left arm 28a, the pivot supporting part 116, the right arm 28b and the bracket 26 so that the swing arm can be swung.

Fig. 4C also shows that the upper bracket mounting part 111 and the lower bracket mounting part 113 are reinforced by gradually widening the left reinforcement walls 121, 122 (only the left reinforcement wall 121 is shown) and the right reinforcement walls 123, 124 (only the right reinforcement wall 123 is shown) from the side of the pivot supporting part 116 to the side of the upper bracket mounting part 111 and by gradually widening them from the side of the pivot supporting part 116 to the side of the lower bracket mounting part 113. Reference numerals 126, 127 denote a recessed portion located on the side of the vehicle with the vertical wall 23A in the center and formed between the upper bracket mounting part 111 and the lower bracket mounting part 113.

As described above, the rear frame 23 is a member in which the recessed portions 126, 127 open sideways, the upper bracket mounting part 111 and the lower bracket mounting part 113 and the pivot supporting part 116 respectively protruded sideways are integrated by casting in a mold that can be split sideways.

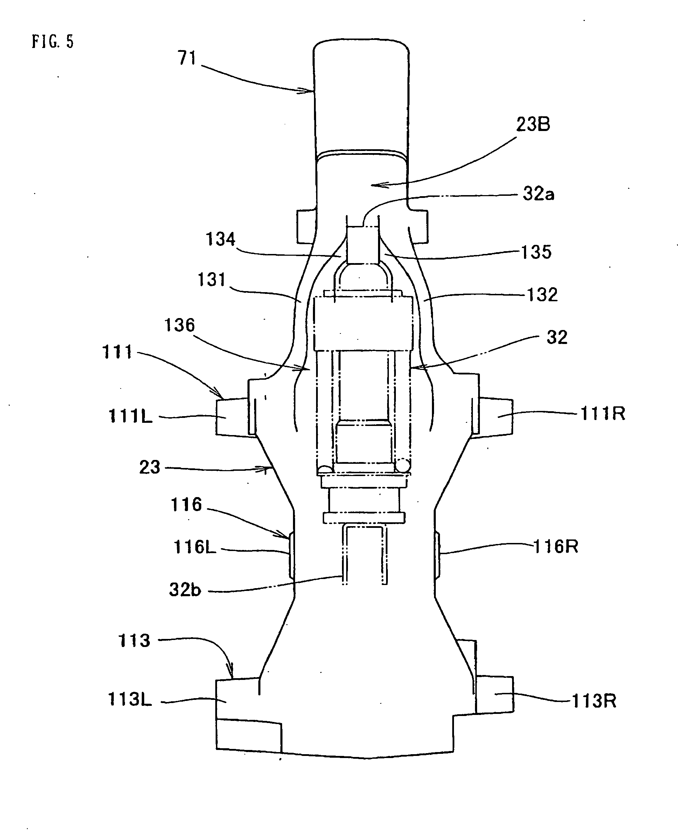

Fig. 5 is a back view showing the main frame according to the invention and the rear frame 23 is provided with standing walls 131, 132 protruded integrally backward from left and right edges to cover the left and right sides of the rear cushion unit 32 to a rear wall 23B. Reference numerals 134, 135 denote a cushion upper part mounting part (see Fig. 2) in which the cushion upper part mounting hole 93 (see Fig. 2) for mounting an upper end 32a of the rear cushion unit 32 is made, 136 denotes space between the left and right standing walls 131, 132 for housing a part of the rear cushion unit 32, and 32b denotes a lower end at which the rear cushion unit 32 is attached to the swing arm 28 (see Fig. 1).

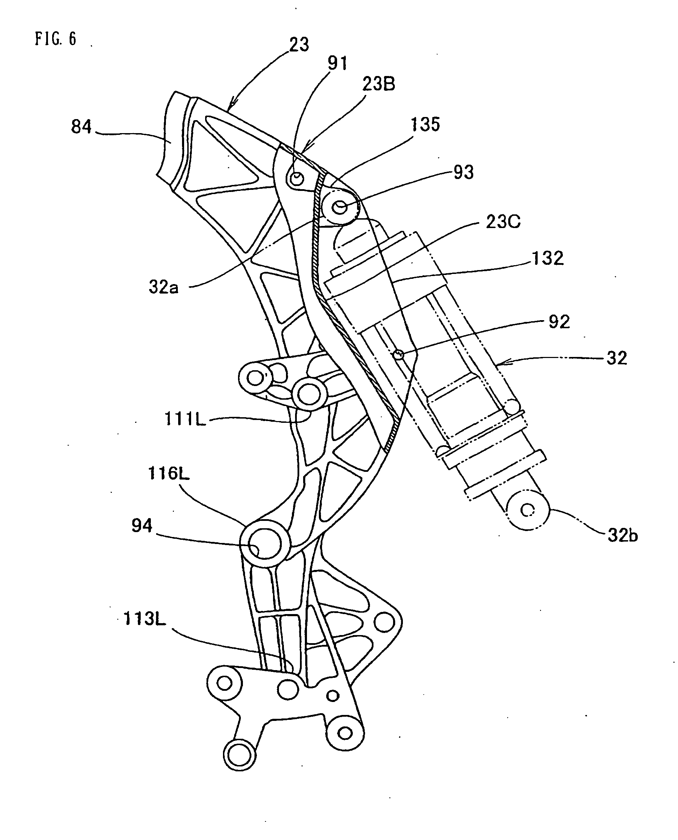

Fig. 6 is a sectional view (a part of which is a side view) showing a state in which the rear cushion unit is attached to the rear frame according to the invention, a rear bottom wall 23C located between the standing walls 131, 132 (only 132 on the inside is shown) and forming a part of the rear wall 23B is a part substantially along the rear cushion unit 32, and the cushion upper part mounting parts 134, 135 (only 135 is shown) are protruded from the rear bottom wall 23C and the standing walls 131, 132.

The standing walls 131, 132 can be easily formed by casting, can be easily formed, compared with a case that standing walls are formed by separate members by welding for example, the cost can be reduced, and the productivity can be enhanced. As the standing walls 131, 132 also function as a reinforcing rib, the strength and the rigidity of the rear frame 23 can be easily enhanced, compared with a case that a separate reinforcement is attached.

As shown in Figs. 1, 3 and 5, the invention is first based upon the motorcycle 10 where the head pipe 14 provided to the front end, the main frame part 74 as one main frame extended backward from the head pipe 14 and the rear frame 23 as a pivot frame extended substantially downward from the rear of the main frame part 74 are provided in the main frame 12 as a main part of the body frame 11, the pivot 27 is pierced in the pivot supporting part 116 provided to the rear frame 23, the swing arm 28 for supporting the rear wheel 31 is attached to the pivot 27 so that the swing arm can be vertically swung and the rear cushion unit 32 is laid between the swing arm 28 and the side of the body frame 11, and is first characterized in that the main frame 12 of the body frame 11 is cast in an aluminum alloy and the rear frame 23 on the upside and the downside of the pivot supporting part 116 is protruded on both sides of the vehicle from the pivot supporting part 116 to mount the left and right brackets 24, 26 (see Fig. 4C) supporting both ends of the pivot 27.

The main frame 12 of the body frame 11 where the upside and the downside of the pivot supporting part 116 in the rear frame 23 are protruded on both sides of the vehicle from the pivot supporting part 116, the left arm 28a and the right arm 28b as left and right arm parts of the swing arm 28 are arranged between the pivot supporting part 116 and each bracket 24, 26 and the swing arm 28 is supported by both the pivot supporting part 116 and the left and right brackets 24, 26 via the pivot 27 can be easily integrated by casting, a welded part around a pivot as in a conventional type is not required, the number of parts can be reduced, the productivity of the body frame 11 can be enhanced, the body frame 11 can be lightened, and the cost can be reduced.

The invention is secondly characterized in that the standing walls 131, 132 extended backward for covering the left and the right of the rear cushion unit 32 are provided to the front frame 71, detailedly at least one of the rear of the main frame part 74 and the rear of the rear frame 23.

As the standing walls 131, 132 are provided to at least one of the rear of the main frame part 74 and the rear of the rear frame 23, the standing walls 131, 132 can be easily formed by casting without welding separate parts, and the strength and the rigidity of the body frame 11 can be easily secured by the standing walls 131, 132.

The invention is thirdly characterized in that the recessed portions 126, 127 open sideways, the pivot supporting part 116, the upper bracket mounting part 111 and the lower bracket mounting part 113 respectively protruded sideways can be integrated by casting the rear frame 23 in the mold which can be split sideways as shown in Fig. 4C.

As the recessed portions 126, 127 open sideways, the pivot supporting part 116, the upper bracket mounting part 111 and the lower bracket mounting part 113 respectively protruded sideways are integrated in the mold which can be split sideways, the recessed portions 126, 127, the pivot supporting part 116, the upper bracket mounting part 111 and the lower bracket mounting part 113 can be easily formed.

In this embodiment, as shown in Fig. 6, the cushion upper part mounting parts 134, 135 for attaching the upper end 32a of the rear cushion unit 32 are provided to the rear of the rear frame 23, however, the invention is not limited to this and the cushion upper part mounting parts may be also provided to the rear of the front frame 71.

The body frame according to the invention can be favorably applied to a motorcycle.

10 --- Motorcycle, 11 --- Body frame, 12 --- Main part of body frame (Main frame), 14 --- Head pipe, 23 --- Rear frame (Pivot frame), 24, 26 --- Bracket, 27 --- Pivot, 28 --- Swing arm, 32 --- Cushion unit (Rear cushion unit), 74 --- Main frame (Main frame part), 111 --- Upper bracket mounting part, 113 --- Lower bracket mounting part, 116 --- Pivot supporting part, 126, 127 --- Recessed portion

## Claims

1. A body frame of a motorcycle (10) where a head pipe (14) provided to a front end, one main frame (12) extended backward from the head pipe (14) and a rear frame (23) extended substantially downward from the rear of the main frame (12) are provided to a main part of the body frame (11), a pivot (27) pierces a pivot supporting part (116) provided to the rear frame (23), a swing arm (28) for supporting a rear wheel is attached to the pivot (27) so that the swing arm (28) can be vertically swung and a cushion unit (32) is laid between the swing arm (28) and the side of the body frame (11), wherein:
the main frame (12) of the body frame (11) is cast in an aluminium alloy;
**characterized in that**
the rear frame (23) on the upside and on the downside of the pivot supporting part (116) is protruded on both sides of the vehicle from the pivot supporting part (116) to attach right and left brackets (24, 26) for supporting both ends of the pivot (27).

2. A body frame of a motorcycle (10) according to Claim 1, wherein:
standing walls (131, 132) extended backward for covering the right and the left of the cushion unit (32) are provided to at least one of the rear of the main frame (12) and the rear of the rear frame (23).

3. A body frame of a motorcycle (10) according to any of the preceding claims, wherein:
recessed portions (126, 127) open sideways, the pivot supporting part (116), an upper bracket mounting part (111) and a lower bracket mounting part (113) respectively protruded sideways are integrated by casting the rear frame (23) in a mold which can be split sideways.

## Patentansprüche

1. Körperrahmen eines Motorrads (10), bei dem ein an einem vorderen Ende vorgesehenes Kopfrohr (14), ein sich vom Kopfrohr (14) nach hinten erstreckender Hauptrahmen (12) und ein sich im Wesentlichen vom hinteren Ende des Hauptrahmens (12) nach unten erstreckender Hinterrahmen (23) an einem Hauptteil des Körperrahmens (11) vorgesehen sind, ein Schwenkzapfen (27) ein am Hinterrahmen (23) vorgesehenes Drehzapfenauflageteil (116) durchdringt, ein Schwenkarm (28) zum Lagern eines Hinterrades am Schwenkzapfen (27) angebracht ist, so dass der Schwenkarm (28) vertikal geschwenkt werden kann, und eine Dämpfereinheit (32) zwischen dem Schwenkarm (28) und der Seite des Körperrahmens (11) eingebracht ist, wobei der Hauptrahmen (12) des Körperrahmens (11) als Aluminiumlegierung gegossen ist, **dadurch gekennzeichnet, dass**
der Hinterrahmen (23) an der Oberseite und an der Unterseite des Drehzapfenauflageteils (116) auf beiden Seiten des Fahrzeugs vom Drehzapfenauflageteil (116) hervorragt, um eine rechte und eine linke Halterung (24, 26) zum Lagern beider Enden des Drehzapfens (27) anzubringen.

2. Körperrahmen eines Motorrads (10) nach Anspruch 1, wobei
sich nach hinten erstreckende stehende Wandungen (131, 132) zum Bedecken der rechten und der linken Dämpfereinheit (32) an zumindest einem der hinteren Enden des Hauptrahmens (12) und des Hinterrahmens (23) vorgesehen sind.

3. Körperrahmen eines Motorrads (10) nach einem der vorhergehenden Ansprüche, wobei
seitlich offene vertiefte Abschnitte (126, 127), das Drehzapfenauflageteil (116), ein oberes Halterungsmontageteil (111) und ein unteres Halterungsmontageteil (113), die jeweils seitlich hervorragen, durch Gießen des Hinterrahmens (23) in einer Form, die seitlich geteilt werden kann, einstückig sind.

## Revendications

1. Châssis de corps d'une motocyclette (10) où un tube de tête (14) agencé sur une extrémité avant, un châssis principal (12) s'étendant en arrière du tube de tête (14) et un châssis arrière (23) étendu sensiblement vers le bas à partir de l'arrière du châssis principal (12) sont agencés sur une partie principale du châssis de corps (11), un pivot (27) traverse une partie de support de pivot (116) agencée sur le châssis arrière (23), un bras oscillant (28) pour supporter une roue arrière est fixé sur le pivot (27) de sorte que le bras oscillant (28) peut être oscillé verticalement, et une unité d'amortissement (32) est disposée entre le bras oscillant (28) et le côté du châssis de corps (11), dans lequel:
le châssis principal (12) du châssis de corps (11) est moulé en alliage d'aluminium ;
**caractérisé en ce que**
le châssis arrière (23) sur le dessus et le dessous de la partie de support de pivot (116) fait saillie des deux côtés du véhicule à partir de la partie de support de pivot (116) pour fixer des étriers droit et gauche (24, 26) destinés à supporter les deux extrémités du pivot (27).

2. Châssis de corps d'une motocyclette (10) selon la revendication 1, dans lequel :
des parois debout (131, 132) étendues vers l'arrière pour couvrir la droite et la gauche de l'unité d'amortissement (32) sont prévues sur au moins un parmi l'arrière du châssis principal (12) et l'arrière du châssis arrière (23).

3. Châssis de corps d'une motocyclette (10) selon l'une quelconque des revendications précédentes, dans lequel :
des parties évidées (126, 127) s'ouvrent latéralement, la partie de support de pivot (116), une partie de montage d'étrier supérieur (111) et une partie de montage d'étrier inférieur (113), faisant respectivement saillie latéralement, sont intégrées par moulage du châssis arrière (23) dans un moule qui peut être fendu latéralement.
